# FASCICULE DE BREVET EUROPEEN

(11) **EP 3 966 430 B1**
(45) Date de publication et mention de la délivrance du brevet: **10.12.2025**
(21) Numéro de dépôt: 20715097.0
(22) Date de dépôt: 03.04.2020
(51) Int. Cl.: F01D 5/08, F01D 17/14, F01D 21/12, F01D 25/12

(54) **DISPOSITIF DE VENTILATION D'URGENCE DE TURBINE DE TURBOMACHINE, DÉCLENCHÉ PAR FUSION D'UN MOYEN DE VERROUILLAGE**
NOTKÜHLUNGSANORNDUNG EINER TURBINE EINER TURBOMASCHINE, DIE DURCH DAS SCHMELZEN EINES VERRIEGELUNGSMITTELS AUSGELÖST WIRD
EMERGENCY COOLING ARRANGEMENT OF A TURBINE OF A TURBOMACHINE, TRIGGERED BY THE FUSION OF LOCKING MEANS

(30) Priorité: 10.05.2019 FR 1904870
(43) Date de publication de la demande: 16.03.2022
(73) Titulaire: SAFRAN AIRCRAFT ENGINES, 75015 Paris (FR)
(72) Inventeur: FONTANEL, Eddy, Stéphane, Joël, 77550 MOISSY-CRAMAYEL (FR); ATTALI, Matthieu, Etienne, 77550 MOISSY-CRAMAYEL (FR); GAUTHIER, Gérard, Philippe, 77550 MOISSY-CRAMAYEL (FR); SCHWEBLEN, Wilfried, Lionel, 77550 MOISSY-CRAMAYEL (FR)
(74) Mandataire: Cabinet Beau de Loménie
(86) Numéro de dépôt international: PCT/EP2020/059633
(87) Numéro de publication internationale: WO 2020/229056

(56) Documents cités:
- WO-A1-2019/077251
- DE-A1- 102010 020 800
- US-A- 3 108 434
- US-A- 4 807 433
- US-B2- 7 077 622

## Description

### Domaine Technique

L'invention concerne le domaine des turbomachines. Plus précisément, l'invention concerne un module de turbomachine d'aéronef, et une turbomachine comprenant un tel module.

### Technique antérieure

Dans les turbomachines d'aéronef, il est courant d'utiliser des circuits d'air secondaires, permettant par exemple d'assurer des débits de ventilation nécessaires dans certaines régions de ces turbomachines. Certains de ces circuits d'air secondaires peuvent n'être nécessaires qu'en cas de dysfonctionnement, et ne sont pas utiles dans le cas d'un fonctionnement nominal de la turbomachine. Pour des raisons d'optimisation de fonctionnement des turbomachines, et d'économie d'énergie, il est donc souvent souhaitable que ces circuits secondaires fonctionnent uniquement en cas de dysfonctionnements. Par exemple, en cas de dysfonctionnement du débit de purge dans une turbine basse pression ou une turbine haute pression, permettant la purge de l'air chaud et la ventilation de certaines pièces (ex : disques, aubes mobiles) de ces turbines, un débit d'air de refroidissement supplémentaire est nécessaire afin de limiter les risques de surchauffe des pièces mobiles des turbines, pouvant aboutir à une dégradation de celles-ci et dans le pire des cas, à une rupture de ces pièces.

A l'inverse, dans d'autres cas de dysfonctionnements, il peut être au contraire souhaitable de ne plus alimenter ces circuits d'air secondaires. Par exemple, en cas d'incendie dans un environnement clos, comme par exemple un compartiment à l'intérieur d'une nacelle de turbomachine, il est nécessaire de couper la circulation d'air de ventilation afin de ne pas alimenter le feu.

Pour contrôler ces circuits d'air secondaires en fonction des conditions de températures, il est connu d'utiliser des systèmes comprenant des pièces telles que des bouchons fusibles, pouvant fondre au-delà d'une certaine température. Le document DE 10 210 020800 A1 divulgue un système comprenant un tel matériau fusible.

Cependant, en environnement moteur, ces solutions existantes peuvent présenter des inconvénients, dans des localisations proches de pièces tournantes à haute énergie notamment. En effet, ces pièces fusibles peuvent libérer des quantités de matière importantes pouvant entrer en contact avec les pièces tournantes, et créer des dommages mécaniques préjudiciables. Il existe donc un besoin pour palier à ces inconvénients.

### Exposé de l'invention

Le présent exposé concerne un module de turbomachine d'aéronef tel que défini dans la revendication 1, comprenant un dispositif de ventilation configuré pour faire circuler un débit d'air de refroidissement dans le module de turbomachine, le dispositif de ventilation comprenant une sortie d'air, un moyen d'obturation fixé à la sortie d'air et mobile entre une position d'obturation de la sortie d'air et une position d'ouverture de la sortie d'air, et un moyen de verrouillage configuré pour maintenir le moyen d'obturation dans l'une de la position d'obturation et de la position d'ouverture lorsque la température au sein du module est inférieure à une valeur seuil prédéterminée, le moyen d'obturation étant configuré pour adopter l'autre de la position d'obturation et de la position d'ouverture lorsque la température au sein du module est supérieure à ladite valeur seuil prédéterminée.

La position d'obturation est une position dans laquelle, lorsque l'air de refroidissement s'écoule dans une direction amont-aval du dispositif de circulation, l'air ne peut s'écouler entre l'amont et l'aval de la sortie d'air. En d'autres termes, une région en amont de la sortie d'air n'est pas en communication fluidique avec une région en aval de la sortie d'air. A l'inverse, la position d'ouverture est une position dans laquelle l'air peut s'écouler entre l'amont et l'aval de la sortie d'air. En d'autres termes, une région en amont de la sortie d'air est en communication fluidique avec une région en aval de la sortie d'air.

Lorsque la température au sein du module est inférieure à la valeur seuil prédéterminée, le moyen de verrouillage maintien le moyen d'obturation dans l'une de ces deux positions. A l'inverse, lorsque la température au sein du module est supérieure à ladite valeur seuil prédéterminée, le moyen de verrouillage est configuré pour déverrouiller le moyen d'obturation, permettant à ce dernier d'adopter l'autre de ces deux positions. Le moyen d'obturation étant fixé à la sortie d'air de manière mobile entre la position d'obturation et d'ouverture, il peut donc alternativement empêcher ou permettre le passage de l'air par la sortie d'air, tout en restant solidaire et fixé à ladite sortie d'air. Ainsi, lors du passage de la position d'obturation à la position d'ouverture, ou inversement, le risque qu'une pièce, ou une quantité de matière importante entre en contact avec des pièces tournantes de la turbomachine est ainsi limité.

Le moyen de verrouillage comprend un matériau fusible configuré pour fondre lorsque la température au sein du module atteint la valeur seuil prédéterminée.

En d'autres termes, l'augmentation de la température au sein du module de turbine entraîne la fusion, ou le fluage, d'une partie au moins du moyen de verrouillage. De ce fait, la fusion, ou le fluage, du moyen de verrouillage permet le déverrouillage, c'est-à-dire la libération, du moyen d'obturation. La fusion du moyen de verrouillage due à l'augmentation de la température permet donc à ce dernier de passer automatiquement d'un premier état, dans lequel il maintient le moyen d'obturation dans la position d'obturation ou dans la position d'ouverture, à un deuxième état, permettant la libération du moyen d'obturation, ce dernier pouvant alors passer dans l'autre de la position d'obturation ou d'ouverture.

Dans certains modes de réalisation, le moyen d'obturation reste solide lorsque la température au sein du module est supérieure à la valeur seuil prédéterminée.

En d'autres termes, la température de fusion du moyen d'obturation est supérieure à la valeur seuil prédéterminée de la température, de sorte que le moyen d'obturation ne change pas d'état lorsque ladite valeur seuil est dépassée, contrairement au moyen de verrouillage. Ainsi, le moyen d'obturation reste solidaire de la sortie d'air. Le risque qu'une pièce entre en contact avec des pièces tournantes de la turbomachine est ainsi limité.

Dans certains modes de réalisation, lorsque la température au sein du module est inférieure à la valeur seuil prédéterminée, le moyen de verrouillage présente un volume compris entre 5 et 20 mm³.

Ces valeurs permettent de s'assurer que, lorsque la température au sein du module est supérieure à la valeur seuil prédéterminée, le risque qu'une quantité de matière importante entre en contact avec des pièces tournantes de la turbomachine soit limité. En particulier, ces volumes peuvent être environ trente fois inférieurs aux volumes des bouchons fusibles connus.

Le module est une turbine comprenant une veine annulaire d'écoulement d'air chaud, une cavité sous veine coaxiale à la veine d'écoulement d'air chaud, le dispositif de ventilation comprenant un dispositif d'injection configuré pour injecter un air de refroidissement dans la cavité sous veine, et au moins un tube s'étendant dans la cavité sous veine, une première extrémité du tube étant fixée à une paroi de la cavité sous veine, la sortie d'air étant une deuxième extrémité du tube sur laquelle le moyen d'obturation est fixé et maintenu en position d'obturation par le moyen de verrouillage lorsque la température au sein de la cavité sous veine est inférieure à la valeur seuil prédéterminée, le moyen d'obturation étant configuré pour adopter la position d'ouverture lorsque la température au sein de la cavité sous veine est supérieure à la valeur seuil prédéterminée.

L'air chaud s'écoulant dans la veine annulaire est l'air provenant de la combustion du moteur de la turbomachine, et permettant d'entraîner les aubes de la turbine. La cavité sous veine est une enceinte disposée par exemple radialement à l'intérieur de la veine annulaire. Le dispositif d'injection peut comprendre des premiers injecteurs permettant d'injecter de manière continue dans cette cavité de l'air de refroidissement prélevé en amont, dans le compresseur haute pression par exemple. Par « injecter de manière continue », on comprend que le premier injecteur injecte un premier débit d'air de refroidissement en permanence lorsque le moteur est en fonctionnement. Ce premier débit peut être constant ou osciller autour d'un débit d'air de refroidissement nominal correspondant à un fonctionnement nominal de la turbomachine, c'est-à-dire un fonctionnement caractérisé par une absence d'anomalie ou de panne dans la turbine. On notera que ce fonctionnement nominal peut comprendre l'usure de la turbomachine, mais pas les cas de pannes telles que la rupture d'un canal d'alimentation d'air. De plus, en cas de panne entraînant une augmentation de la température, les caractéristiques structurelles du premier injecteur ne changent pas, de sorte que le premier injecteur continue à injecter le premier débit. Ce premier débit est donc un débit d'air de refroidissement nécessaire pour assurer une purge d'air chaud suffisante lors d'un tel fonctionnement nominal de la turbomachine, sans qu'il soit nécessaire de surdimensionner le dispositif d'injection. De même, au cours du fonctionnement nominal de la turbomachine, le tube, qui est un deuxième injecteur distinct du premier injecteur, peut injecter un deuxième débit d'air de refroidissement dans la cavité sous veine. Ce deuxième débit peut être nul en fonctionnement nominal.

Un débit de purge d'air chaud de la turbine suffisant se caractérise par une température, au sein de cette cavité, restant inférieure à une valeur seuil. Le dépassement de cette valeur seuil de la température indique un débit d'air de refroidissement insuffisant, engendré par une anomalie apparue dans le circuit de refroidissement de la turbomachine. Dans cette configuration de dépassement de la valeur seuil de la température, le moyen de verrouillage change d'état, libérant le moyen d'obturation fixé à la deuxième extrémité du tube. Le deuxième injecteur peut alors injecter, par l'intermédiaire du tube, un débit d'air de refroidissement supplémentaire, supérieur au premier débit, dans la cavité sous veine. Le débit total d'air de refroidissement, comprenant l'air injecté par le premier injecteur, et l'air injecté par le deuxième injecteur, est alors supérieur au débit d'air de refroidissement nominal injecté par le dispositif d'injection lors d'un fonctionnement nominal de la turbomachine.

Par conséquent, le pilotage du débit d'air de refroidissement injecté dans la cavité sous veine en fonction de la température au sein de celle-ci, permet d'augmenter le débit d'air de refroidissement uniquement en cas de dysfonctionnement ou de panne, caractérisés par une augmentation de la température au sein de la cavité sous veine. Cela permet donc d'augmenter le débit d'air de refroidissement uniquement lorsque cela est nécessaire, sans nécessiter un surdimensionnement permanent du dispositif de refroidissement. L'impact du système de refroidissement sur la consommation en carburant est ainsi limité, ce qui permet ainsi d'améliorer les performances du moteur. Par ailleurs, le fait que le moyen d'obturation reste solidaire du tube lors du dépassement de la température seuil permet de limiter le risque qu'une pièce, ou une quantité de matière importante entre en contact avec des pièces tournantes, par exemple les aubes de la turbine.

Dans certains modes de réalisation, la valeur seuil de température est comprise entre 550 et 600°C.

Cette température seuil est de préférence inférieure à une température critique à partir de laquelle les éléments de la turbine tels que les aubes se détériorent. Ainsi, lorsque la valeur seuil de température au sein de la cavité est atteinte, l'injection d'un débit d'air de refroidissement supplémentaire, par l'intermédiaire du dispositif de ventilation, permet de diminuer la température de la turbine avant que les aubes, ou le disque portant les aubes, ne se détériorent.

Le moyen d'obturation est un clapet mobile entre la position d'obturation et d'ouverture par l'intermédiaire d'une charnière fixée à la deuxième extrémité du tube.

Lorsque la température au sein de la cavité sous veine est inférieure à la valeur seuil prédéterminée, l'air de refroidissement dans le tube exerce une pression sur une face du clapet, ce dernier étant retenu par le moyen de verrouillage. Lorsque la température au sein de la cavité sous veine passe au-dessus de la valeur seuil prédéterminée, le moyen de verrouillage libère le clapet, ce dernier pouvant alors pivoter autour de l'axe de rotation formé par la charnière. Ce mécanisme de charnière présente l'avantage d'être simple à mettre en œuvre, et permet de maintenir le clapet solidaire du tube, même lorsqu'il est en position d'ouverture.

Dans certains modes de réalisation, le moyen de verrouillage est un dépôt de matériau eutectique dans un angle entre le clapet en position d'obturation et la paroi du tube.

Le dépôt de matériau eutectique est à l'état solide lorsque la température au sein de la cavité sous veine est inférieure à la valeur seuil prédéterminée. Par « dans un angle entre le clapet en position d'obturation et la paroi du tube », on comprend que le dépôt est fixé à la fois à la paroi du tube et au clapet. Le dépôt agit donc comme une cale empêchant au clapet de s'ouvrir lors d'un fonctionnement nominal de la turbomachine. Une faible quantité de matériau eutectique est donc nécessaire pour assurer cette fonction de cale. Ainsi, lors du changement d'état de ce matériau lorsque la température seuil est atteinte, la quantité de matière risquant d'entrer en contact avec des pièces tournantes est limitée.

Dans certains modes de réalisation, le module est une turbine basse pression de turbomachine ayant des aubages non ventilés.

Le présent exposé concerne également une turbomachine comprenant le module selon l'un quelconque des modes de réalisation précédents.

### Brève description des dessins

L'invention et ses avantages seront mieux compris à la lecture de la description détaillée faite ci-après de différents modes de réalisation de l'invention donnés à titre d'exemples non limitatifs. Cette description fait référence aux pages de figures annexées, sur lesquelles :
[Fig. 1] la figure 1 est une vue en coupe longitudinale d'une turbomachine,
[Fig. 2] la figure 2 est une vue en coupe longitudinale et partielle d'une turbine haute et basse pression de la turbomachine de la figure 1,
[Fig. 3] la figure 3 est une vue en coupe (à gauche) et une vue en perspective (à droite) d'une sortie d'air d'un dispositif de ventilation de la turbine de la figure 2, avec un moyen d'obturation en position d'obturation,
[Fig. 4] la figure 4 est une vue en coupe (à gauche) et une vue en perspective (à droite) de la sortie d'air de la figure 3, avec le moyen d'obturation en position d'ouverture,
[Fig. 5] la figure 5 est une vue en coupe d'une nacelle de la turbomachine de la figure 1, avec un moyen d'obturation en position d'ouverture (à gauche), et en position d'obturation (à droite).

### Description des modes de réalisation

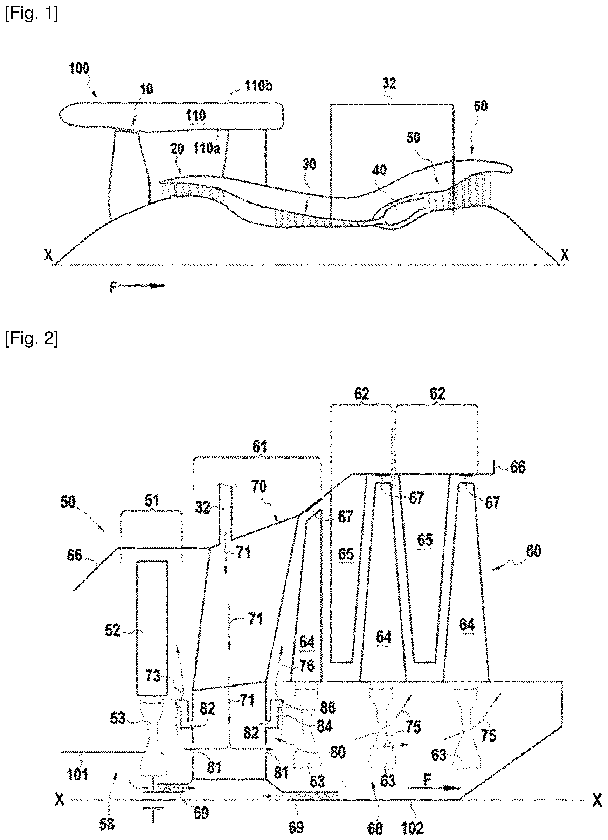

Un premier mode de réalisation du présent exposé va être présenté en référence aux figures 1 à 4.

Les termes « amont » et « aval » sont par la suite définis par rapport au sens d'écoulement des gaz au travers une turbomachine, indiqué par la flèche F sur les figures 1 et 2.

La figure 1 illustre une turbomachine 100 à double flux comprenant de manière connue d'amont en aval successivement au moins une soufflante 10, une partie moteur comprenant successivement au moins un étage de compresseur basse pression 20, de compresseur haute pression 30, une chambre de combustion 40, au moins un étage de turbine haute pression 50 et de turbine basse pression 60. Dans le présent mode de réalisation, le module de turbomachine est un étage de turbine haute pression 50 ou de turbine basse pression 60.

Des rotors, tournant autour de l'axe principal X de la turbomachine 100 et pouvant être couplés entre eux par différents systèmes de transmission et d'engrenages, correspondent à ces différents éléments.

De manière connue, une fraction d'air est prélevée sur le compresseur haute pression 30 et est acheminée par l'intermédiaire d'un conduit de refroidissement 32 en vue de refroidir des zones plus chaudes de la turbomachine 100, notamment la turbine haute pression 50 et la turbine basse pression 60.

La figure 2 est un agrandissement d'une zone de la turbomachine 100, illustrant de manière simplifiée la partie aval de la turbine haute pression 50 et la partie amont de la turbine basse pression 60.

La partie aval de la turbine haute pression 50 ici représentée illustre un étage 51 comprenant au moins une aube mobile 52 assemblée sur un disque 53 mobile solidaire en rotation d'un arbre haute pression 101.

La turbine basse pression 60 ici illustrée comprend une pluralité d'étages 61, 62 de turbine. Un premier étage 61, ainsi que les étages 62 situés en aval de celui-ci comprennent respectivement un ensemble de distributeurs fixes 70 et 65. Chaque étage 61, 62 comprend en outre un disque 63 mobile sur lequel est monté un ensemble d'aubes 64 entraînées en rotation par le disque 63 mobile. Le premier étage 61 de la turbine basse pression 60 comprend au moins une aube 64 mobile, ainsi qu'au moins un distributeur 70 creux, dans lequel circule de l'air de refroidissement. Dans l'exemple illustré sur la figure 2, le distributeur 70 forme une seule pièce avec un carter 66 constitutif de la turbine et est creux pour laisser passer de l'air de refroidissement, sortant par l'intermédiaire d'un dispositif d'injection 80 associés au distributeur 70, comprenant une pluralité d'injecteurs. Les étages 62 suivants, situés en aval de la turbine basse pression 60, comprennent chacun au moins une aube 64 mobile et un distributeur 65 se présentant sous la forme d'un aubage fixe. Le disque 63 mobile est solidaire en rotation d'un arbre basse pression 102 s'étendant selon l'axe X-X, tandis que chaque stator 65 est relié au carter 66. Chaque étage 61, 62 de turbine comprend en outre un anneau de turbine 67 situé en regard des aubes 64 mobiles, et qui est solidaire du carter 66.

Conformément au présent exposé, la turbomachine comprend un dispositif de refroidissement permettant d'acheminer, via le conduit de refroidissement 32, la fraction d'air prélevée sur le compresseur haute pression 30 vers au moins un étage de la turbine haute pression 50 et de la turbine basse pression 60. Dans le mode de réalisation décrit ci-dessous, la fraction d'air de refroidissement prélevée est distribuée au niveau d'un étage aval de la turbine haute pression 50 et d'un étage amont de la turbine basse pression 60. Les turbines haute et basse pression 50, 60 sont ainsi refroidies. Cependant, l'invention n'est pas limitée à ce mode de réalisation, la fraction d'air prélevée pouvant être également distribuée à d'autres étages des turbines.

Dans le mode de réalisation illustré sur la Figure 2, la fraction d'air prélevée dans le compresseur haute pression 30 s'écoule dans le conduit de refroidissement 32, puis dans le distributeur 70 creux. La direction de circulation de la fraction d'air au travers du distributeur creux 70 est illustrée par les flèches 71. La fraction d'air est ensuite injectée via les dispositifs d'injection 80 dans une cavité sous veine 58, 68. L'air distribué permet notamment de refroidir les disques 53, 63 des turbines, comme l'illustrent les flèches 75. L'air de refroidissement injecté par les dispositifs d'injection 80 permet par ailleurs la purge de l'air chaud présent dans la turbine haute pression 50 et dans la turbine basse pression 60, assurant ainsi le refroidissement de celles-ci. Plus précisément, l'air de refroidissement prélevé dans le compresseur haute pression et acheminé jusque dans les cavités sous veine 58, 68, constitue une barrière de pression, ou purge, empêchant l'air chaud provenant de la chambre de combustion et s'écoulant dans la veine principale de circulation d'air des turbines, c'est-à-dire dans la veine primaire de circulation d'air de la turbomachine 100, de pénétrer dans les cavités sous veine 58, 68.. La purge de l'air chaud de la turbine haute pression 50 et de la turbine basse pression 60 sont ici symbolisées respectivement par les flèches 73, 76. Les risques de surchauffe des rotors des turbines sont ainsi limités. En particulier, en empêchant l'air de la veine primaire de rentrer dans la cavité sous veine, cette cavité est moins chaude que la veine, et les rotors de turbine peuvent donc résister à des efforts centrifuge plus élevé et être dimensionnés sur des contraintes limites moins élevées.

De manière connue, un ou plusieurs conduits 32 de circulation d'air de refroidissement prélèvent chacun une fraction d'air de refroidissement d'un flux d'air circulant dans le compresseur haute pression 30, et acheminent la fraction d'air prélevée au niveau d'au moins un étage de la turbine haute pression 50 et de la turbine basse pression 60.

Un dysfonctionnement du refroidissement des turbines 50, 60 peut avoir plusieurs causes. Une cause du dysfonctionnement du refroidissement peut être le dysfonctionnement d'un conduit 32, par exemple la rupture ou l'obturation accidentelle d'un des conduits 32 de circulation d'air. Une autre cause de ce dysfonctionnement peut résulter de l'usure excessive ou de la rupture d'un ou plusieurs joints d'étanchéité, ou joint dynamique de la turbine haute pression 50 ou de la turbine basse pression 60. Un dysfonctionnement du refroidissement de la turbine 50, 60 résulte à titre d'exemple d'une défaillance d'un joint labyrinthe 69 assurant l'isolation en pression de la cavité sous veine 58, 68 de la turbine haute ou basse pression 50, 60.

Le dispositif d'injection 80 comporte une pluralité de premiers injecteurs 81, et une pluralité de deuxièmes injecteurs 82, les premiers et deuxièmes injecteurs 81, 82 étant répartis sur une paroi du distributeur 70 autour de l'axe X. Afin de simplifier la description de ce mode de réalisation, un seul premier injecteur 81 et un seul deuxième injecteur 82 sont représentés sur la figure 2 dans chaque cavité sous veine 58, 68. Par ailleurs, dans la suite de la description, le mode de réalisation est décrit en référence à la turbine basse pression 60, par soucis de concision. Néanmoins, les caractéristiques décrites ci-dessous sont également applicables à la turbine haute pression 50.

Le premier injecteur 81 est un orifice réalisé dans la paroi du distributeur 70, permettant d'injecter en permanence, c'est-à-dire de manière continue lorsque la turbomachine est en fonctionnement, un premier débit d'air de refroidissement dans la cavité sous veine 68. Ce premier débit permet d'assurer le refroidissement, plus précisément la purge 76 et le maintien en température de la turbine basse pression 60 dans des conditions de fonctionnement nominal de celle-ci, c'est-à-dire en l'absence d'un des dysfonctionnements mentionnés ci-dessus. Les dimensions de l'orifice sont déterminées de manière à ce que le premier débit soit par exemple compris entre 270 et 310 g/s.

Le deuxième injecteur 82 (dispositif de ventilation) comporte un tube 84 dont une première extrémité est fixée au distributeur 70, et une deuxième extrémité comprenant une sortie d'air obturée par un clapet amovible 86, servant de moyen d'obturation, lors d'un fonctionnement nominal de la turbine 60. Le clapet 86 est fixé à la deuxième extrémité du tube 84 par l'intermédiaire d'une charnière 861. D'autres moyens de fixation du clapet 86 au tube 84, non revendiqués, sont possibles, comme par exemple une chainette, dès lors que le clapet 86 reste relié mécaniquement au tube 84, même lorsque la température au sein de la cavité sous veine 68 est supérieure à la température de fusion définie ci-dessous.

En fonctionnement nominal de la turbine 60, le clapet 86 est maintenu en position d'obturation, empêchant l'air présent dans le tube 84 de pénétrer dans la cavité sous veine 68. Ce maintien en position d'obturation est effectué par l'intermédiaire d'un moyen de verrouillage 87. Le moyen de verrouillage 87 est une pièce mécanique fixée et intercalée entre la paroi interne du tube 84, et la paroi côté cavité du clapet 86. Cette pièce mécanique agit comme une cale empêchant au clapet de s'ouvrir, c'est-à-dire de passer en position d'ouverture, en résistant aux efforts exercés par l'air sur la paroi côté intérieur du tube 84 du clapet 86.

Le moyen de verrouillage 87 peut être réalisé par dépôt d'un matériau eutectique comprenant par exemple 88% d'Aluminium et 12% de Silicium, et présentant une température de fusion de 577°C. Cette température de fusion, et par conséquent le matériau choisi pour le moyen de verrouillage 87, est déterminé de manière à ce que, dans des conditions de fonctionnement nominal, la température au sein de la cavité sous veine 68 reste inférieure à cette température de fusion du moyen de verrouillage 87. Ainsi, dans des conditions de fonctionnement nominal, le clapet 86 obture complètement la deuxième extrémité du tube 84, de manière à ce que l'air de refroidissement ne puisse pas être injecté dans la cavité sous veine par l'intermédiaire du deuxième injecteur 82. Le moyen de verrouillage 87 est configuré pour résister aux différences de pression, dans des conditions de fonctionnement nominal lorsque le clapet 86 obture l'extrémité du tube 84, entre l'air présent dans le tube 84 et la cavité sous veine 68. Le moyen de verrouillage 87 est par exemple configuré pour résister à un différentiel de pression entre l'air présent dans le tube 84 et la cavité sous veine 68 de l'ordre de 3 bars.

Lorsqu'un des dysfonctionnements mentionnés ci-dessus se produit, la température au sein de la cavité sous veine 68 augmente et atteint des valeurs supérieures aux températures représentatives d'un fonctionnement nominal. Lorsque la température au sein de la cavité sous veine 68 atteint la température de fusion du moyen de verrouillage 87, ce dernier fond, libérant ainsi le clapet 86, ce dernier pouvant pivoter autour de la charnière 861 sous l'effet de la pression exercée par l'air dans le tube 84. Un débit d'air de refroidissement supplémentaire, par exemple compris entre 80 et 90 g/s peut alors être injecté dans la cavité sous veine 68 par l'intermédiaire du deuxième injecteur, en plus du premier débit injecté par le premier injecteur. La somme des premier et deuxième débits est supérieure aux plages de débits représentatives d'un fonctionnement nominal, et permet de couvrir les cas de dysfonctionnements, caractérisés par une augmentation de la température dans la turbine. Ainsi, il est possible d'accentuer le refroidissement des disques 63, avant que ces éléments ne se trouvent détériorés par une augmentation excessive de la température. En particulier, l'injection du débit d'air de refroidissement supplémentaire permet d'augmenter le débit de purge 76, et ainsi d'empêcher l'air chaud de la veine de pénétrer dans la cavité sous veine 68.

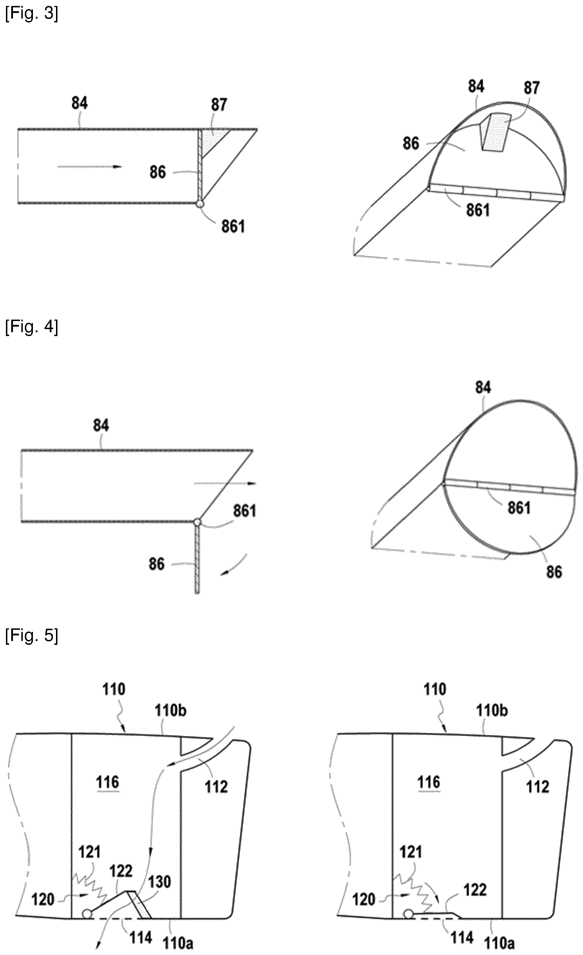

Un deuxième mode de réalisation donné à titre illustratif et ne faisant pas partie de l'objet revendiqué va être présenté en référence à la figure 5.

Dans le présent mode de réalisation, le module de turbomachine est une nacelle 110 de turbomachine. La nacelle 110 a une forme annulaire et définit une veine annulaire d'écoulement d'un flux secondaire. La nacelle 110 comporte une face interne 110a définissant ladite veine annulaire, et une face externe 110b en contact avec l'air ambiant. La nacelle comporte, entre la face interne et la face externe, un compartiment interne 116, dans lequel sont logés des équipements, tels que des boitiers d'accessoires électroniques, des pompes et réservoirs à huile et carburant, et autres (non représentés).

Un dispositif de ventilation comporte un moyen d'admission d'air 112 sur la face externe 110b, et une sortie d'air sur la paroi interne 110a. De manière alternative, le moyen d'admission d'air 112 peut être disposé sur la paroi interne 110a, et la sortie d'air peut être disposée sur la face externe 110b. Le moyen d'admission d'air 112 peut-être par exemple une écope, par laquelle de l'air de refroidissement peut pénétrer dans le compartiment interne 116. La sortie d'air peut comprendre une grille de sortie d'air 114, par laquelle l'air de refroidissement circulant dans le compartiment interne 116 peut être évacué. La circulation d'un débit d'air de refroidissement, par l'intermédiaire du dispositif de ventilation (flèches sur la fig. 5 à gauche), permet d'assurer la tenue thermique des équipements présents dans ce compartiment.

Un dysfonctionnement des équipements présents dans le compartiment interne 116 peut provoquer un feu à l'intérieur de ce dernier. Le débit d'air circulant dans le compartiment a pour effet d'entretenir ce feu.

Un moyen d'obturation 120 permet d'obturer la grille de sortie d'air 114 en cas d'incendie. Le moyen d'obturation 120 comprend un couvercle 122, ou porte amovible, et un ressort 121. Le ressort 121 est fixé au couvercle 122 d'une part, et à une paroi de la sortie d'air fixée à la nacelle 110 et immobile par rapport à celle-ci. Le ressort 121 est configuré pour travailler en compression, de manière à pousser le couvercle 122 vers la grille de sortie d'air 114.

En fonctionnement nominal, c'est-à-dire en l'absence d'anomalie engendrant un incendie, le couvercle 122 doit être maintenu en position d'ouverture, de manière à permettre à l'air de refroidissement présent dans le compartiment interne 116 d'être évacué par la grille de sortie d'air 114, maintenant ainsi un débit d'air de refroidissement dans le compartiment interne 116 nécessaire à la tenue thermique des équipements. Pour ce faire, un moyen de verrouillage 130 est intercalé entre la paroi interne 110a de la nacelle 110 et le couvercle 122, agissant ainsi comme une cale permettant de conserver une section de passage suffisante pour l'éjection de l'air par la grille de sortie d'air 114.

Le moyen de verrouillage 130 peut être une tige fusible comprenant un matériau eutectique comprenant par exemple 45% d'Argent, 38% d'or et 17% de germanium, et présentant une température de fusion de 525°C. Cette température de fusion, et par conséquent le matériau choisi pour le moyen de verrouillage 130, est déterminé de manière à ce que, dans des conditions de fonctionnement nominal, la température au sein du compartiment interne 116 reste inférieure à cette température de fusion du moyen de verrouillage 130. Ainsi, dans des conditions de fonctionnement nominal, le couvercle 122 reste en position d'ouverture, de manière à ce que l'air de refroidissement puisse circuler dans le compartiment interne 116. La tige fusible 130 est configuré pour être suffisamment épaisse de manière à résister à la force exercée par le ressort 121, et suffisamment fine pour laisser une section de passage suffisante pour avoir un impact limité ou nul sur le débit d'air de refroidissement.

Lorsqu'un dysfonctionnement mentionné ci-dessus se produit, la température au sein du compartiment interne 116, en particulier la température de l'air de refroidissement circulant dans le compartiment interne 116 augmente à cause du feu, et atteint des valeurs supérieures aux températures représentatives d'un fonctionnement nominal. Lorsque cette température atteint la température de fusion du moyen de verrouillage 130, ce dernier fond, libérant ainsi le couvercle 122, ce dernier pouvant passer en position d'obturation sous l'effet de la pression exercée par le ressort 121 (fig. 5, à droite). Dans cette position d'obturation de la grille de sortie d'air 114, l'air de refroidissement ne peut plus circuler dans le compartiment interne 116, de telle sorte que le feu présent dans ce dernier est étouffé.

Bien que la présente invention ait été décrite en se référant à des exemples de réalisation spécifiques, il est évident que des modifications et des changements peuvent être effectués sur ces exemples sans sortir de la portée générale de l'invention telle que définie par les revendications. En particulier, des caractéristiques individuelles des différents modes de réalisation illustrés/mentionnés peuvent être combinées dans des modes de réalisation additionnels. Par conséquent, la description et les dessins doivent être considérés dans un sens illustratif plutôt que restrictif.

Il est également évident que toutes les caractéristiques décrites en référence à un procédé sont transposables, seules ou en combinaison, à un dispositif, et inversement, toutes les caractéristiques décrites en référence à un dispositif sont transposables, seules ou en combinaison, à un procédé.

## Revendications

1. Turbine (60) de turbomachine d'aéronef comprenant un dispositif de ventilation configuré pour faire circuler un débit d'air de refroidissement dans la turbine, la turbine (60) comprenant une veine annulaire d'écoulement d'air chaud, une cavité sous veine (68) coaxiale à la veine d'écoulement d'air chaud, le dispositif de ventilation comprenant :
- un dispositif d'injection (80) configuré pour injecter un air de refroidissement dans la cavité sous veine (68),
- au moins un tube (84) s'étendant dans la cavité sous veine (68), une première extrémité du tube (84) étant fixée à une paroi de la cavité sous veine (68), une deuxième extrémité du tube (84) étant une sortie d'air,
- un moyen d'obturation (86) fixé à la deuxième extrémité et mobile entre une position d'obturation de la sortie d'air et une position d'ouverture de la sortie d'air, et
- un moyen de verrouillage (87, 130) configuré pour maintenir le moyen d'obturation (86) dans la position d'obturation lorsque la température au sein de la cavité sous veine (68) est inférieure à une valeur seuil prédéterminée, le moyen de verrouillage (87, 130) comprenant un matériau fusible configuré pour fondre, de manière à permettre au moyen d'obturation (86) d'adopter la position d'ouverture, lorsque la température au sein du module (60, 110) est supérieure à ladite valeur seuil prédéterminée, **caractérisé en ce que** le moyen d'obturation (86) est un clapet mobile entre la position d'obturation et la position d'ouverture par l'intermédiaire d'une charnière (861) fixée à la deuxième extrémité du tube (84).

2. Turbine (60, 110) selon la revendication 1, dans lequel, lorsque la température au sein de la turbine (60) est inférieure à la valeur seuil prédéterminée, le moyen de verrouillage (87, 130) présente un volume compris entre 5 et 20 mm³.

3. Turbine (60) selon la revendication 1 ou 2, dans lequel le moyen de verrouillage (87) est un dépôt de matériau eutectique dans un angle entre le clapet (86) en position d'obturation et la paroi du tube (84).

4. Turbomachine comprenant la turbine (60) selon l'une quelconque des revendications précédentes.

## Patentansprüche

1. Turbine (60) einer Luftfahrzeug-Turbomaschine, umfassend eine Belüftungsvorrichtung, die konfiguriert ist, um einen Kühlluftdurchsatz durch die Turbine zirkulieren zu lassen, die Turbine (60) umfassend einen ringförmigen Heißluftstromkanal, einen Teilkanalhohlraum (68) koaxial zu dem Heißluftstromkanal, die Belüftungsvorrichtung umfassend:
- eine Einblasvorrichtung (80), die konfiguriert ist, um Kühlluft in den Teilkanalhohlraum (68) einzublasen,
- mindestens ein Rohr (84), das sich in den Teilkanalhohlraum (68) erstreckt, wobei ein erstes Ende des Rohrs (84) an einer Wand des Teilkanalhohlraums (68) befestigt ist, ein zweites Ende des Rohrs (84) ein Luftauslass ist,
- eine Verschlusseinrichtung (86), die an dem zweiten Ende befestigt ist und zwischen einer Verschlussposition des Luftauslasses und einer Öffnungsposition des Luftauslasses bewegbar ist, und
- eine Verriegelungseinrichtung (87, 130), die konfiguriert ist, um die Verschlusseinrichtung (86) in der Verschlussposition zu halten, wenn die Temperatur innerhalb des Teilkanalhohlraums (68) unter einem vorbestimmten Schwellenwert ist, die Verriegelungseinrichtung (87, 130) umfassend ein schmelzbares Material, das konfiguriert ist, um zu schmelzen, sodass die Verschlusseinrichtung (86) die Öffnungsposition einnehmen kann, wenn die Temperatur innerhalb des Moduls (60, 110) über dem vorbestimmten Schwellenwert ist, **dadurch gekennzeichnet, dass** die Verschlusseinrichtung (86) ein Ventil ist, das über ein Scharnier (861), das an dem zweiten Ende des Rohrs (84) befestigt ist, zwischen der Verschlussposition und der Öffnungsposition bewegbar ist.

2. Turbine (60, 110) nach Anspruch 1, wobei, wenn die Temperatur innerhalb der Turbine (60) unter dem vorbestimmten Schwellenwert ist, die Verriegelungseinrichtung (87, 130) ein Volumen zwischen 5 und 20 mm³ aufweist.

3. Turbine (60) nach Anspruch 1 oder 2, wobei die Verriegelungseinrichtung (87) eine Ablagerung aus eutektischem Material in einem Winkel zwischen dem Ventil (86) in der Verschlussposition und der Wand des Rohrs (84) ist.

4. Turbomaschine, umfassend die Turbine (60) nach einem der vorherigen Ansprüche.

## Claims

1. An aircraft turbomachine turbine (60) comprising a ventilation device configured to have a cooling air flow circulate in the turbine, the turbine (60) comprising a annular vein of hot airflow, a sub-vein cavity (68) coaxial to the hot airflow vein, the ventilation device comprising:
- an injection device (80) configured to inject cooling air into the sub-vein cavity (68),
- at least one tube (84) extending into the sub-vein cavity (68), a first end of the tube (84) being fixed to a wall of the sub-vein cavity (68), a second end of the tube (84) being an air outlet,
- blocking means (86) fixed to the second end and mobile between a blocking position of the air outlet and an opening position of the air outlet, and
- locking means (87, 130) configured to maintain the blocking means (86) in the blocking position when the temperature within the sub-vein cavity (68) is less than a predetermined threshold value, the locking means (87, 130) comprising a fusible material configured to melt so as to let the blocking means (86) adopt the opening position when the temperature within the module (60, 110) is greater than said predetermined threshold value, **characterized in that** the blocking means (86) are a flap mobile between the blocking position and opening position by means of a hinge (861) fixed to the second end of the tube (84).

2. The turbine (60, 110) according to claim 1, wherein, when the temperature within the turbine (60) is less than the predetermined threshold value, the locking means (87, 130) present a volume of between 5 and 20 mm³.

3. The turbine (60) according to claim 1 or 2, wherein the locking means (87) are a deposit of eutectic material in an angle between the flap (86) in blocking position and the wall of the tube (84).

4. The turbomachine comprising the turbine (60) according to any one of the preceding claims.
